# EUROPEAN PATENT APPLICATION

(11) **EP 1 643 750 A2**
(43) Date of publication of application: **05.04.2006**
(21) Application number: 05108926.6
(22) Date of filing: 27.09.2005
(51) Int. Cl.: H04N 1/00

(54) **Multifunctional peripheral device**

(30) Priority: 01.10.2004 KR 2004078299
(71) Applicant: Samsung Electronics Co., Ltd., Suwon-si, Gyeonggi-Do (KR)
(72) Inventor: Hwang, Sun-kye, Yeongtong-gu Suwon-si, Gyeonggi-do (KR); Lee, Sang-jin, Gyeonggi-do (KR)
(74) Representative: Read, Matthew Charles

(57) **Abstract**

A multifunction peripheral (MFP) device having priority operation mode and a method of initializing the MFP device in priority operation mode. The MFP device having priority operation mode according to the present invention includes a key input unit for setting a priority operation mode, to execute a desired operation mode preferentially to other operation modes, and a memory for storing information on the priority operation mode set, whereby only a module relevant to the priority operation mode is initialized. Accordingly, a user is given an option to select a desired operation mode preferentially, and the selected function is ready within a minimum standby time.

## Description

The present invention relates to a multifunction peripheral (MFP) device.

A multifunction peripheral (MFP) device is a versatile terminal, merging the functions of office appliances such as facsimiles, printers, scanners and copiers into one powerful peripheral device that can be used independently or can be connected to a computer.

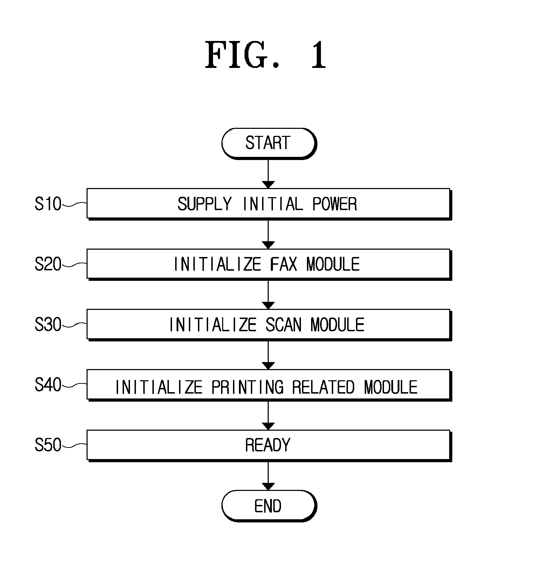

Conventionally, when the MFP device is initially started, every module of the MFP device is initialized. Figure 1 is a flow chart illustrating an initialization procedure of each module when a conventional MFP device is turned on. Once the initialization procedure is finished, the MFP can operate to perform all the functions. However, the MFP cannot execute any function until the initialization procedure is completed.

Referring to Figure 1, when a user turns on an MFP device (operation S10), a fax module is initialized (operation S20). Then, the warm-up is performed for several seconds to initialize a scan module (operation S30).

After the scan module is initialized, a printing-related engine module is initialized (operation S40) to be able to perform a printing operation. Usually several tens of seconds are required for the printing-related engine module to warm up and initialize. Once every module is initialized, the MFP device is in Ready mode, able to perform an operation according to a user command (operation S50).

The above-described MFP device has a disadvantage that during the initialization process, all modules have to be initialized following a fixed initialization sequence. The initialization sequence cannot be modified according to a user's desire. For example, even though a user wants to use only the scanner or needs to print something first, before performing any function, all the modules of the MFP device have to complete the initialization process, consuming unnecessary power and time.

Moreover, another disadvantage is that unnecessary noise is created by the printer engine although the user may have no intention to use the printer. Therefore, there is a need for developing an MFP device having a priority operation mode, whereby a user can initialize a particular operation module preferentially or exclusively.

The present invention seeks to provide a multifunction peripheral device.

According to a first aspect of the present invention there is provided a multifunction peripheral (MFP) device having a priority operation mode including a plurality of modules to execute different functions associated with the MFP operation modes, a key input unit to select a priority operation mode, to execute a module's initialization preferentially to other modules' initializations, and a memory to store information on the priority operation mode set, whereby only a module relevant to the priority operation mode is initialized.

The MFP device may further include a controller to execute a display control to display information on the pre-set priority operation mode stored in the memory, and to display a menu to change the priority operation mode, in order to enable a user to change the pre-set priority operation mode if desired.

The MFP device may further include a display unit to display the information on the priority operation mode, and the menu to change the priority operation mode, under the control of the controller.

The display unit may be installed in a host PC or an operation panel of the MFP device.

If the priority operation mode is changed in response to a user-selected change using the menu to change a priority operation mode, the controller may determine the initialization of another module relevant to a new or changed priority operation mode.

The operation mode may be selected, for example, from Copy, Fax, Print, and Scan modes.

If a user does not input an operation command, after a predetermined time interval following the initialization of the module relevant to the pre-set priority operation mode, the controller may execute the initialization of the remaining modules according to a predetermined initialization sequence.

After a predetermined time interval following the initialization of the module relevant to the priority operation mode, the controller may execute the initialization of the remaining operation modules according to a predetermined initialization sequence.

According to a second aspect of the present invention there is provided a multifunction peripheral device (MFP) including a plurality of functional modules having a priority operation mode, including a user interface to allow a user to request initialization of a particular functional module among the plurality of functional modules, and a controller able execute a priority operation mode by initializing the particular functional module among the plurality of functional modules according to the user's request.

If during a predetermined time interval the user does not request initialization of any functional module of the MFP's plurality of functional modules, the controller may initialize all the modules in a predetermined initialization sequence.

The controller may store information relative to previous priority operation mode, and if during a predetermined time interval the user does not request initialization of a functional module, the controller can executes previous priority operation mode.

The user interface may include a menu to change the priority operation mode that allows the user to request initialization of any functional module of the MFP's plurality of functional modules, at any time.

According to a third aspect of the present invention there is provided a multifunction peripheral (MFP) device including a controller to control a pre-set operation mode of initialization of a plurality of modules and an operation panel to control the controller to change priority of initialization of the plurality of modules.

According to a fourth aspect of the present invention there is provided a method of initializing a multifunction peripheral (MFP) device having a priority operation mode, the method including setting a priority operation mode to execute a desired operation mode preferentially to other operation modes, and storing information on the priority operation mode set, and initializing only a module relevant to the stored priority operation mode.

The method may further include displaying the information on the stored priority operation mode, and displaying a 'priority operation mode change menu' to enable a user to change the pre-set priority operation mode after the information on the stored priority operation mode is displayed. If the pre-set priority operation mode is changed by a user using the menu to change priority operation mode, the initialization of only the module relevant to the changed priority operation mode is initialized.

According to a fifth aspect of the present invention there is provided a multifunction peripheral device (MFP) including a plurality of functional modules comprising a user interface to allow a user request initialization of a functional module of the plurality of functional modules, and a controller able execute a priority operation mode by initializing one functional module according to the user's request.

According to a sixth aspect of the present invention there is provided a method of initializing an MFP comprising selecting an MFP function to be performed and identifying functional modules from a plurality of MFP modules that have to be initialized to perform the desired function, and initializing only the identified functional modules to get MFP ready to execute the function.

According to a seventh aspect of the present invention there is provided a computer-readable recording medium containing computer readable codes to perform a method of initializing an MFP device including functional modules, the method including identification of the modules relevant to an MFP user selected function, and performing a preferential initialization of the MFP modules necessary to execute a user selected function.

According to an eighth aspect of the present invention there is provided a multifunction device comprising a plurality of means for performing functions, each function performing means performing a respective function and means for controlling said plurality of function performing means, said controlling means configured to user-selectably initialise a given function performing means before other function performing means.

The controlling means may only initialise said given function performing means.

Embodiments of the present invention will now be described, by way of example, with reference to Figures 2 to 4 of the accompanying drawings in which:
Figure 1 is a flow chart illustrating an initialization procedure of each module when a conventional MFP device is turned on;
Figure 2 is a schematic block diagram of an embodiment of a multifunction peripheral device having a priority operation mode according to the present invention;
Figure 3 is a flow chart illustrating an embodiment of a method of initializing a multifunction peripheral device having a priority operation mode according to the present invention; and
Figure 4 is a diagram illustrating an embodiment of a priority operation menu according to an embodiment of the present invention.

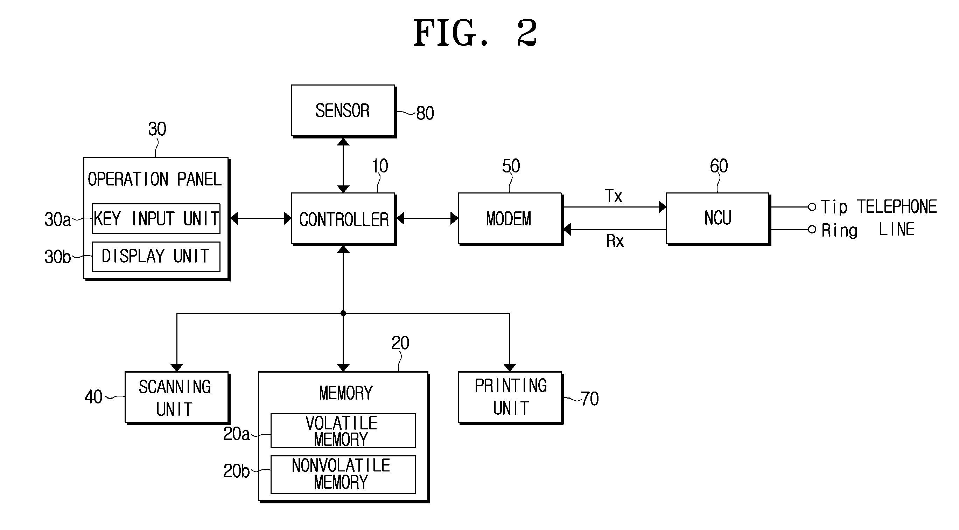

Figure 2 is a schematic block diagram of an embodiment of a multifunction peripheral (MFP) device having a priority operation mode according to the present invention. As can be seen in Figure 2, the multifunction peripheral device having a priority operation mode includes a controller 10, a memory 20, an operation panel 30, a scanning unit 40, a modem 50, a Network Control Unit (hereinafter it will be referred to simply as 'NCU') 60, a printing unit 70, and a sensor 80.

The controller 10 controls each module of the MFP device. For example, the printing unit 70, the scanning unit 40, the modem 50, and the sensor 80 are controlled by the controller 10 according to a predetermined program.

The operation panel 30 includes a key input unit 30a and a display unit 30b. Other types of user input means may be used. The key input unit 30a includes number keys and function keys (e.g., SEND key) through which a user is able to input a desired number or execute a function. The operation panel 30 generates key data necessary for the system operation and transmits the data to the controller 10. In the present embodiment, the key input unit 30a is used to set a priority operation mode. The priority operation mode is a particular operation mode that is preferentially selected by the user from a plurality of operation modes such as 'Copy', 'Fax', 'Printing' and 'Scan'. In other words, a priority operation mode designates a function of the MFP.

The memory 20 includes a volatile memory 20a to store data during operation, and a nonvolatile memory 20b to store all of the programs associated with the overall system operation. The nonvolatile memory 20b stores information on the priority operation mode designated by the user.

The display unit 30b displays an operational state of the MFP device under the control of the controller 10. A typical example of the display unit 30b is an LCD (Liquid Crystal Display). The display unit 30b displays information on a priority operation mode and 'Priority operation mode change menu'.

The scanning unit 40, under the control of the controller 10, moves a document being loaded, scans the information on the document, converts the information to binary data, and stores it in the memory 20. The modem 50, under the control of the controller 10, modulates data for analogue transmission or demodulates received digital data.

The NCU 60, under the control of the controller 10, forms a call loop of a tip or a ring, and interfaces a telephone line with the modem 50.

The sensor 80, under the control of the controller 10, can detect the existence of a document, residual quantity of recording papers, and conversion of a page, and provides the information to the controller 10. The printing unit 70, under the control of the controller 10, receives image data of a document from the memory 20, and prints it on a paper.

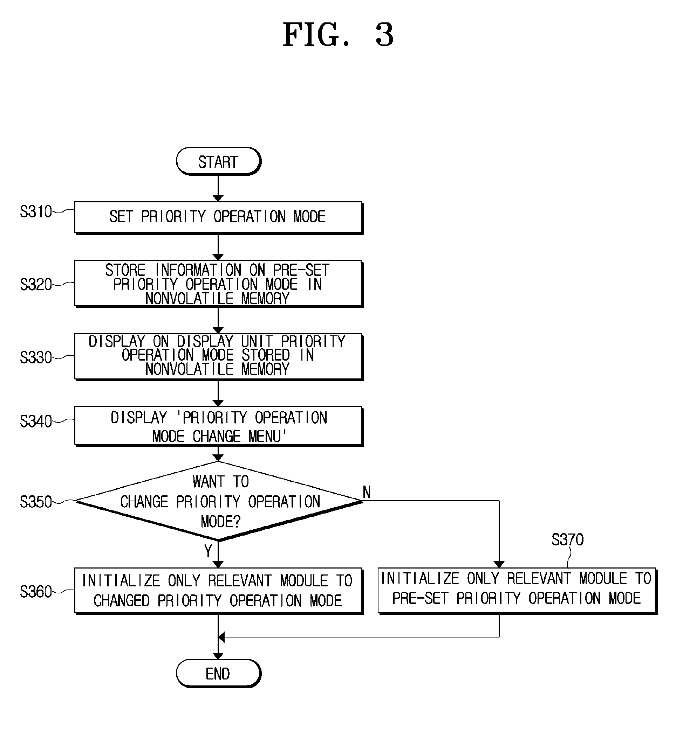

Figure 3 is a flow chart illustrating a method of initializing a multifunction peripheral device having a priority operation mode according to an embodiment of the present invention. Referring to Figure 3, a user sets a priority operation mode to initialize a desired operation module first among other operation modules of the multifunction peripheral device (operation S310).

The following explains the procedure to set the priority operation mode.

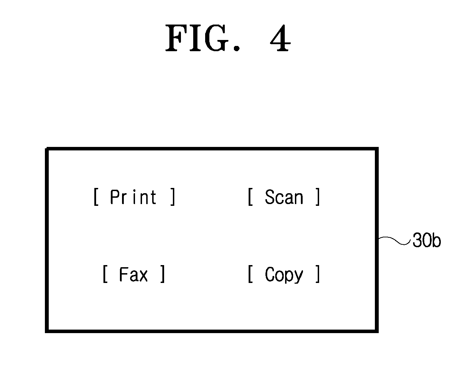

If a user selects a menu button (not shown) located in the key input unit 30a, a plurality of predetermined menu items are displayed on the display unit 30b. If the user selects an [operation Priority] among the menu items on the display unit 30b, an item relevant to the priority operation menu (see Figure 4) is displayed on the display unit 30b. The display unit 30b may indicate a display unit installed on the operation panel of the MFP device. For example, if a host monitor communicating with the MFP device over a network is used as the display unit 30b, the user can set the priority operation mode function using the key input unit and the display unit (i.e., the monitor) of the host.

If the user selects one of the items as illustrated in Figure 4 ([Print], [Scan], [Fax], [Copy]) and sets the priority operation mode, the controller 10 stores the selected item in the nonvolatile memory 20b (operation S320).

Information on the priority operation mode selected by a user may be stored in the nonvolatile memory 20b. Therefore, although power may be turned off and turned back on later, the information may be recovered.

To help the user check the priority operation mode currently being set, the controller 10 displays the pre-stored priority operation mode in the nonvolatile memory 20b on the display unit 30b at operation S330.

Then, the controller 10 displays a menu to change the priority operation mode on the display unit 30b at operation S340, to enable the user to change the pre-set priority operation mode. Thus, by displaying the menu to change the priority operation mode on the display unit 30b, the user is given an option to change the priority operation mode.

If the user changes the pre-set priority operation mode at operation S350, only the module relevant to the new or changed priority operation mode is initialized at operation S360. For example, if the priority operation mode is changed from [Print] to [Scan], the controller 10 makes only the scanning unit 40 progress an initial warm-up, and controls the printing unit 70 to be in a standby state. Therefore, the initialized module is ready to be used, whereas the operations of other modules in standby state, which are not initialized, are stopped.

However, if the user does not change the pre-set priority operation mode at operation S350, only the module relevant to the pre-set priority operation mode stored in the nonvolatile memory 20b is initialized at operation S370. That is, if the pre-set priority operation mode stored in the nonvolatile memory 20b is [Print], the controller 10 makes only the printing unit 70 progress an initial warm-up.

If the user inputs an operation command following the initial warm-up, the MFP device executes an operation according to the operation command from the user. Only the module relevant to the priority operation mode is initialized before the first user command is executed. If the user does not input any operation command after a predetermined time interval(t1), or after a predetermined time interval (t2), the other modules are initialized according to the predetermined initialization sequence.

As described above, the MFP device of the present invention helps the user select the priority operation mode. If a priority operation mode is selected, one module is initialized to execute the user's desired function within a minimum time.

In addition, according to the present invention, since other modules not selected are not warmed up during the initialization process of the MFP device, the power consumption can be reduced and warm-up time can be shortened. Moreover, it is now possible to reduce the noise due to the warming-up of a printer engine that is not being used.

Although a few embodiments of the present invention have been shown and described, it will be appreciated by those skilled in the art that changes may be made in these embodiments, the scope of which is defined in the appended claims and their equivalents.

## Claims

1. A multi function peripheral (MFP) device having a priority operation mode, the MFP device comprising:
a plurality of modules to execute different functions associated with MFP operation modes;
a key input unit to select a priority operation mode, to execute a module's initialization preferentially to other modules' initialization; and
a memory to store information on the priority operation mode set, whereby only a module relevant to the priority operation mode is initialized.

2. The MFP device according to claim 1, further comprising:
a controller to execute a display control to display information on the priority operation mode stored in the memory, and to display a menu to change the priority operation mode to enable a user to change a pre-set priority operation mode.

3. The MFP device according to claim 2, further comprising:
a display unit to display the information on the priority operation mode and the menu to change the priority operation mode, under the control of the controller.

4. The MFP device according to claim 3, wherein the display unit is installed in a host PC or an operation panel of the MFP device.

5. The MFP device according to claim 2, wherein if a user does not input a priority operation mode, after a predetermined time interval following the initialization of the module relevant to the pre-set priority operation mode, the controller initializes the remaining operation modules according to a predetermined initialization sequence.

6. The MFP device according to claim 2, wherein the controller initializes all the remaining operation modules according to a predetermined initialization sequence after a predetermined time interval.

7. The MFP device according to claim 2, wherein if the priority operation mode is changed using the menu to change the priority operation mode, the controller initializes only the module relevant to the changed priority operation mode.

8. The MFP device according to claim 1, wherein the operation mode is selected from Copy, Fax, Print, and Scan modes.

9. A multi function peripheral device (MFP) including a plurality of functional modules comprising:
a user interface to allow a user to request priority initialization of a particular functional module among the plurality of functional modules; and
a controller able execute a priority operation mode by initializing the particular functional module among the plurality of functional modules according to the user's request.

10. The MFP device according to claim 9, wherein if the user does not request initialization of a functional module of the plurality of functional modules, after a predetermined time interval the controller initializes all modules, in a predetermined initialization sequence.

11. The MFP device according to claim 9, wherein the controller stores the information relative to previous priority operation mode, and if the user does request initialization of a functional module of the plurality of functional modules during a predetermined time interval, the controller executes the previous priority operation mode.

12. The MFP device according to claim 9, wherein the user interface includes a menu to change the priority operation mode, that allows the user to request initialization of any functional module of the plurality of functional modules, at any time.

13. A multifunction peripheral (MFP) device comprising:
a controller to control a pre-set operation mode of initialization of a plurality of modules; and
an operation panel to control the controller to change priority of initialization of the plurality of modules.

14. The MFP device according to claim 13, wherein the operation panel can be operated to control the controller to initialize only one of the plurality of modules.

15. The MFP device according to claim 14, wherein if it is determined in a predetermined period of time that the control panel is not operated, the controller controls the MFP to operate according to the pre-set operation mode.

16. A method of initializing a multi function peripheral (MFP) device including operation modules and having a priority operation mode, the method comprising:
setting a priority operation mode to execute a desired operation mode preferentially to other operation modes, and storing information on the priority operation mode set; and
initializing only the module relevant to the stored information on the priority operation mode.

17. The method according to claim 16, further comprising:
displaying the information on the stored priority operation mode, and displaying a menu to change the priority operation mode to enable a user to change the pre-set priority operation mode; and
initializing only the module relevant to the changed priority operation mode, if the priority operation mode was changed using the menu for changing the priority operation mode.

18. The method according to claim 16, wherein the operation mode is selected from Copy, Fax, Print, and Scan modes.

19. The method according to claim 16, further comprising:
initializing only the module relevant to the pre-set priority operation mode, if the priority operation mode was not changed.

20. The method according to claim 16, further comprising :
initializing the remaining operation modules according to a predetermined initialization sequence if the user does not input a command for a predetermined time interval following the initialization of the module relevant to the pre-set priority mode.

21. The method according to claim 16, further comprising:
initializing the remaining operation modules according to a predetermined initialization sequence after a predetermined time interval following the initialization of the relevant module to the pre-set priority operation mode.

22. A method of initializing an MFP comprising:
selecting an MFP function to be performed and identifying functional modules from a plurality of MFP modules that have to be initialize to perform the desired MFP function; and
initializing only the identified MFP modules to get MFP ready to execute the function.

23. The method according to claim 22 further comprising:
storing information relative to the identified modules initialized to perform the function; and
performing MFP initialization according to the stored information about the previous initialization, if the user does not select a desired function for a predetermined time interval.

24. The method according to claim 22 further comprising:
initializing all the modules of the MFP after a predetermined time interval.

25. A computer-readable recording medium containing computer readable codes to perform a method of initializing an MFP device including functional modules, the method comprising:
identification of the modules relevant to an MFP user selected function; and
performing a preferential initialization of the MFP modules necessary to execute a user selected function.

26. A multifunction device comprising:
a plurality of means (40, 50, 70, 80) for performing functions, each function performing means performing a respective function; and
means (10) for controlling said plurality of function performing means, said controlling means configured to user-selectably initialise a given function performing means before other function performing means.

27. A device according to claim 26, wherein said controlling means (10) only initialises said given function performing means.
